# EUROPÄISCHE PATENTSCHRIFT

(11) **EP 2 894 363 B1**
(45) Veröffentlichungstag und Bekanntmachung des Hinweises auf die Patenterteilung: **03.01.2018**
(21) Anmeldenummer: 14193714.4
(22) Anmeldetag: 18.11.2014
(51) Int. Cl.: F16D 23/02

(54) **Reibring, Synchronring, Synchronisierungseinheit, sowie ein Zahnräderwechselgetriebe für ein Fahrzeug**
Friction ring, synchronisation ring, synchronisation unit and a variable speed gearbox for a motor vehicle
Anneau de friction, anneau de synchronisation, appareil de synchronisation, ainsi que boîte manuelle à engrenages pour un véhicule

(30) Priorität: 17.12.2013 EP 13197885
(43) Veröffentlichungstag der Anmeldung: 15.07.2015
(73) Patentinhaber: Oerlikon Friction Systems (Germany) GmbH, 28719 Bremen (DE)
(72) Erfinder: Skipper, Gary I, Swansea, SA4 3GH (GB); Spreckels, Marcus, 28876 Sagehorn (DE); Christoffer, Ulf, 28719 Bremen (DE)
(74) Vertreter: Intellectual Property Services GmbH

(56) Entgegenhaltungen:
- EP-A1- 1 199 489
- DE-A1-102008 061 965

## Beschreibung

Die Erfindung betrifft einen Reibring für eine Synchronisiereinheit eines schaltbaren Zahnräderwechselgetriebes, einen Synchronring, eine Synchronisierungseinheit, sowie ein Zahnräderwechselgetriebe für ein Fahrzeug gemäss dem Oberbegriff der unabhängigen Ansprüche.

Synchronringe dienen in einem mechanischen schaltbaren Zahnräderwechselgetriebe, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartner erzielt. Die Funktionsweise solcher Getriebe und der Ablauf des Synchronisationsvorgangs sind an sich bekannt und brauchen dem Fachmann hier nicht mehr näher erläutert zu werden.

Zum Schutz gegen vorzeitigen Verschleiss und / oder zur Verbesserung der Reibcharakteristik ist es bekannt, die Reibflächen von Synchronringen, die in der Regel aus einem Metall oder einer Metallegierung, wie beispielsweise aus Messing oder Stahl gefertigt sind, mit einer Reibschicht zu versehen. Dabei sind ganz verschiedene Typen von Reibschichten im Gebrauch, z.B. thermische Spritzschichten aus Molybdän, Carbon-Reibschichten oder Reibschichten aus anderen Materialien.

Synchronisierungseinheiten für Zahnräderwechselgetriebe bzw. einzelne Komponenten von Synchronisierungseinheiten sind im Stand der Technik vielfältig und ausführlich beschrieben.

So sind beispielweise Handschalt- und Doppelkupplungsgetriebe heutzutage in vielen Anwendungen die dominierenden Getriebetypen im Klein- und Mittelklassewagensegment insbesondere bei Front-Quer-Antrieben. Die Schaltcharakteristik dieser Getriebearten wird wesentlich durch die Synchronisierung bestimmt, deren Prinzip heute wie damals auf dem sogenannten Borg-Warner-Konzept beruht. Eine hohe Effizienz zur Realisierung kurzer Schaltzeiten bei niedrigen Schaltkräften und ein hoher Schaltkomfort sind immer wichtiger werdende Anforderungen an das System Synchronisierung.

Die geometrische Auslegung einer klassischen Borg-Warner-Synchronisierung hinsichtlich Effizienz und Schaltkomfort wird dabei durch einen Zielkonflikt bestimmt. Eine hohe Effizienz wird durch kleine Konuswinkel der Reibpaarung erreicht, der Verstärkungseffekt des Konus erzeugt hohe Synchronisierungsmomente trotz niedriger Betätigungskräfte. Demgegenüber setzt der Selbsthemmungseffekt, der ein Lösen der Reibflächen verhindert und den Schaltkomfort substanziell und spürbar für den Fahrer beeinträchtigt, der Minimierung des Konuswinkels eine natürliche Grenze. Die Optimierung einer Synchronisierung ist daher immer ein Kompromiss zwischen Effizienz und Schaltkomfort.

Die dominierende Art von Synchronisierungen, die innerhalb der dem Getriebefachmann bestens bekannten MT-, AMT- und DCT-Getrieben genutzt werden, sind im konventionellen BorgWarner Design ausgeführt. Aufgrund der ständigen Forderungen nach höheren Schaltleistungen und Drehmomenten, wurden auf dieser Basis anspruchsvollen Mehrfach-Konus-Synchronisierungen mit doppelten, dreifachen und in bestimmten Nischen-Anwendungen auch mit vierfachen Reibflächen entwickelt. Diese hoch entwickelten Synchronmodule haben erhöhte Leistungs- und Momentenkapazitäten, aufgrund der mehrfachen Reibungsflächen. Nichtsdestotrotz erhöhen sie auch die Komplexität, Kosten und nicht zuletzt auch das Gewicht der entsprechenden Getriebe.

Die EP 0 280 136 A1 beschreibt einen Synchronisierungskörper für ein Stufengetriebe eines Kraftfahrzeugs mit einem Grundkörper und einem Reibkörper. Der Reibkörper ist in Axialrichtung formschlüssig am Grundkörper fixiert und in Umfangrichtung schwimmend gelagert.

In der nicht vorveröffentlichten EP 2 677 187 A1 ist ein Reibring für eine Synchronisierungseinheit eines Zahnräderwechselgetriebes offenbart, bei dem sich eine innere Reibfläche unter einem vorgebbaren Reibwinkel und eine äussere Einbaufläche unter einem vorgebbaren Einbauwinkel jeweils konisch entlang der Reibringachse erstrecken, wobei der Reibwinkel verschieden ist vom Einbauwinkel. Dieser Reibring kann beispielsweise aus mehreren Reibring-Segmenten aufgebaut sein.

Diese vorbekannten Reibringe können jedoch unter Umständen in der Handhabung aufgrund der Segmentierung aufwendig sein, wenn diese an und/oder in einer Synchronisierungseinheit montiert werden. Zudem kann es vorkommen, dass der Reibring und der Synchronring in axialer Richtung der Ringe gegeneinander nicht ausreichend genau positioniert werden können beziehungsweise im Betrieb eine Verschiebung in axialer Richtung erfolgt. Auch die EP 1 199 489 A1 und die DE 10 2008 061 965 A1 beschreiben eine Synchronisierungseinheit für ein Zahnräderwechselgetriebe.

Es ist daher eine Aufgabe der vorliegenden Erfindung, die Nachteile des Bekannten zu vermeiden, insbesondere also einen Reibring für eine Synchronisierungseinheit und einen Synchronring bereitzustellen, so dass eine Montage des Reibringes vereinfacht wird und so dass eine axiale Position von Reibring und Synchronring relativ zueinander bei der Montage und im Betrieb zuverlässiger einstellbar ist und ausserdem ein hoher Schaltkomfort ermöglicht wird.

Diese Aufgaben werden durch den Reibring, den Synchronring, die Synchronisierungseinheit und das Zahnräderwechselgetriebe gemäss den unabhängigen Ansprüchen gelöst.

Die abhängigen Ansprüche beziehen sich auf besonders vorteilhafte Ausführungsformen der Erfindung.

Die Erfindung betrifft einen Reibring für eine Synchronisierungseinheit eines Zahnräderwechselgetriebes. Der Reibring umfasst einen konischen Reibringkörper mit einer inneren Reibfläche und einer äusseren Einbaufläche, die den Reibringkörper in einer senkrecht zu einer axialen Reibringachse verlaufenden radialen Umfangsrichtung jeweils begrenzen. Der Reibringkörper umfasst eine Begrenzungseinrichtung zur Begrenzung einer Bewegung des Reibringes relativ zu einer anderen Komponente der Synchronisierungseinheit im Wesentlichen entlang der Reibringachse im Betrieb in der Synchronisierungseinheit. Insbesondere ist die Komponente ein Synchronring.

Dies hat den Vorteil, dass der Reibring mittels der Begrenzungseinrichtung bezogen auf die Reibringachse derart montierbar ist, dass eine Bewegung Im Wesentlichen parallel zur Reibringachse limitiert werden kann. Hierdurch lässt sich vorteilhaft eine vereinfachte Montage des Reibringes erreichen und/oder Bevorzugt ist die Begrenzungseinrichtung derart ausgestaltet, dass der Reibring relativ zum Synchronring parallel zur Reibringachse um höchstens 25% und bevorzugt höchstens 15% der maximalen Höhe H des Reibrings parallel zur Reibringachse verschiebbar ist.

Üblicherweise umfasst die Synchronisierungseinheit als Komponenten eine Schiebemuffe, eine Synchronnabe, einen Synchronring sowie ein Gangrad, die koaxial zur Reibringachse angeordnet sind.

Insbesondere kann die Begrenzungseinrichtung am Reibring fixiert werden, beispielsweise durch ein Kleben und/oder Schweissen. Bevorzugt ist die Begrenzungseinrichtung als ein integrales Teil des Reibringes ausgebildet, welches beispielsweise in einem Umformverfahren oder einem Stanzverfahren integral mit dem Reibring gebildet wird.

Erfindungsgemäss erstreckt sich die innere Reibfläche unter einem vorgebbaren Reibwinkel α₁ und die äussere Einbaufläche unter einem vorgebbaren Einbauwinkel α₂ jeweils konisch entlang der Reibringachse, wobei der Reibwinkel α₁ verschieden vom Einbauwinkel α₂ ist. Bevorzugt ist der Einbauwinkel α₂ grösser als der Reibwinkel α₁.

Dadurch wird vorteilhaft ein Zielkonflikt hinsichtlich Effizienz und Schaltkomfort, wie er seit langem im Stand der Technik bekannt ist, zuverlässig aufgelöst. Durch diese Anordnung der inneren Reibfläche und der äusseren Einbaufläche wird einerseits eine hohe Effizienz der Reibpaarung erreicht, also ein Verstärkungseffekt erzielt, so dass der Konus hohe Synchronisierungsmomente trotz niedriger Betätigungskräfte erzeugen kann. Anderseits wird gleichzeitig der bekannte schädliche Selbsthemmungseffekt, der ein Lösen der Reibflächen verhindert oder zumindest erschwert und den Schaltkomfort substanziell und spürbar für den Fahrer beeinträchtigt, praktisch vollständig vermieden.

Bevorzugt ist der Reibring in einen Synchronring mit einer Zahnradseite einsetzbar, wobei die Begrenzungseinrichtung bei bestimmungsgemässem Gebrauch an einem der Zahnradseite abgewandten Ende angeordnet ist. Mit anderen Worten weist der Reibring im Einbauzustand die Begrenzungseinrichtung an dem der Zahnradseite abgewandten Ende auf.

Insbesondere sind der Reibring und der Synchronring derart ausgebildet, dass mittels eines Formschlusses zwischen der Begrenzungseinrichtung des Reibrings und dem Synchronring eine Bewegung des Reibringes relativ zu einer anderen Komponente der Synchronisierungseinheit im Wesentlichen entlang der Reibringachse im Betrieb in der Synchronisierungseinheit begrenzt werden kann. Ein derartiger Formschluss kann durch ein Eingreifen eines Elements des Reibrings beispielsweise in eine Ausnehmung im Synchronring erfolgen; hierdurch kann eine Bewegung des Reibrings relativ zum Synchronring im Wesentlichen entlang der Reibringachse im Betrieb in der Synchronisierungseinheit begrenzt werden, wobei insbesondere eine relative Drehbewegung des Reibrings und des Synchronrings um die Reibringachse in zumindest einem Winkelabschnitt ermöglicht wird.

Üblicherweise weist ein Synchronring in axialer Richtung des Synchronrings im Wesentlichen parallel zur Reibringachse ein Ende mit einem Zahnrad auf zum Wechselwirken mit einer Schiebemuffe der Synchronisierungseinheit. Meist wird der Reibring von der Zahnradseite in den Synchronring eingeführt und befestigt. Die Anordnung der Begrenzungseinrichtung auf dem der Zahnradseite abgewandten Ende hat den Vorteil, dass der Reibring sicher gegen eine Verschiebung aus der Zahnradseite befestigbar und einfach montierbar ist.

Bevorzugt ist die Begrenzungseinrichtung als zumindest ein Vorsprung ausgebildet. Insbesondere erstreckt sich der zumindest eine Vorsprung im Wesentlichen senkrecht zur Reibringachse. Insbesondere erstreckt sich der zumindest eine Vorsprung in zumindest einem Abschnitt im Wesentlichen parallel zur Umfangsrichtung.

Dies hat den Vorteil, dass der Reibring mittels des Vorsprungs mit dem Synchronring verhakt werden kann, so dass durch den Formschluss eine Verschiebung des Reibringes aus der Zahnradseite des Synchronrings begrenzt werden kann. Somit kann eine gute Befestigung des Reibrings im Synchronring erreicht werden bei gleichzeitiger Gewährleistung eines zuverlässigen Betriebes.

Ein weiterer Aspekt der vorliegenden Erfindung betrifft einen Reibring für eine Synchronisierungseinheit eines Zahnräderwechselgetriebes. Insbesondere ist der Reibring wie vorstehend beschrieben ausgebildet. Der Reibring umfasst einen konischen Reibringkörper mit einer inneren Reibfläche und einer äusseren Einbaufläche, die den Reibringkörper in einer senkrecht zu einer axialen Reibringachse verlaufenden radialen Umfangsrichtung jeweils begrenzen. Der Reibringkörper ist als geschlitzter Reibringkörper mit zumindest einem Schlitz ausgebildet. Der Reibringkörper weist in einer ersten expandierten Konfiguration einen ersten Radius R₁ und in einer zweiten zusammengezogenen Konfiguration einen zweiten Radius R₂ auf. Insbesondere weist der Reibringkörper genau einen Schlitz auf.

Dies hat den Vorteil, dass der Reibring einteilig ausgebildet sein kann und zudem der Radius veränderbar ist, so dass eine Montage des Reibringes vereinfacht werden kann. Zudem ist eine zuverlässige Befestigung des Reibrings aufgrund der Einteiligkeit des Reibrings im Synchronring möglich; hierdurch wird die Zuverlässigkeit im Betrieb erhöht.

Bei einem kleinen Winkel der Reibfläche ist es je nach Anwendung und Ausführungsform möglich, dass es zur Selbsthemmung auf dem Zahnradkonus kommen kann. Das Schlitzen des Reibrings hat den weiteren Vorteil, dass dies vermeidbar ist.

Insbesondere kann ein "geschlitzter Reibring" einen durchgehenden Schlitz durch den Reibring aufweisen, wobei der Schlitz in einem Winkel ungleich 0° oder 180° zur Umfangsrichtung angeordnet ist.

Bevorzugt weist der Schlitz im Reibringkörper eine mittlere Breite B parallel zur Umfangsrichtung auf, die maximal 5mm und bevorzugt maximal 2mm des Umfangs des Reibringkörpers überstreicht. Dies hat den Vorteil, dass eine einfache Montage gewährleistet werden kann bei gleichzeitig guter Reibwirkung im Betrieb durch den Reibring.

Bevorzugt ist der Schlitz im Wesentlichen parallel zur Reibringachse angeordnet.

Der beschriebene Reibring mit einem Reibringkörper mit zumindest einem Schlitz ist auch vorteilhaft umsetzbar, wenn der oben genannte Reibwinkel α₁ gleich ist wie der oben beschriebene Einbauwinkel α₂.

Bevorzugt ist der Reibringkörper ein segmentierter Reibringkörper, der eine Mehrzahl von separaten Reibringsegmenten umfasst, die in einer ringförmigen Anordnung den Reibringkörper derart bilden, dass der Reibringkörper im Einbauzustand in einer ersten expandierten Konfiguration einen ersten Radius R₁ und in einer zweiten zusammengezogenen Konfiguration einen zweiten Radius R₂ hat.

Bei einem kleinen Winkel der Reibfläche ist es je nach Anwendung und Ausführungsform möglich, dass es zur Selbsthemmung auf dem Zahnradkonus kommen kann. Die Segmentierung hat nun den Vorteil, dass dies vermeidbar ist.

Bevorzugt ist am Reibringkörper eine Verdrehsicherung vorgesehen ist, die sich bevorzugt entlang der Reibringachse und / oder senkrecht zur Reibringachse erstreckt. Insbesondere kann die Verdrehsicherung derart ausgestaltet sein, dass ein Verdrehen relativ zum Synchronring oder relativ zum Gangrad im Wesentlichen verhinderbar ist.

Der Reibring mit einem Reibringkörper mit Verdrehsicherung ist auch vorteilhaft umsetzbar, wenn der oben genannte Reibwinkel α₁ gleich ist wie der oben beschriebene Einbauwinkel α₂.

Bevorzugt ist an der Reibfläche und / oder an der Einbaufläche eine Reibbeschichtung, insbesondere ein Reibbeschichtung in Form eines Karbon Reibbelags vorgesehen ist. Dies hat den Vorteil, dass eine hohe mechanische und / oder thermische Belastung der Reibpaarung zumindest teilweise kompensiert werden kann. Die Reibbeschichtung kann auch an einem Reibpartner des Reibrings, wie beispielsweise einem Synchronring oder einem Gangrad angeordnet sein.

Bevorzugt ist der Reibring ein Stahlstanzteil oder ein Blechumformteil. Dies hat den Vorteil, dass eine industrielle Massenfertigung besonders einfach oder kostengünstig ist.

Ein weiterer Aspekt der vorliegenden Erfindung betrifft einen Synchronring, mit einem Reibring, bei welchem der Reibwinkel α₁ verschieden vom Einbauwinkel α₂ ist. Der Synchronring umfasst zumindest eine Verschiebesicherung zur Begrenzung einer Verschiebung des Reibringes im Wesentlichen entlang einer Reibringachse im Betrieb in der Synchronisierungseinheit.

Dies hat den gleichen Vorteil wie oben zur Begrenzungseinrichtung beschrieben.

Insbesondere sind der Reibring und der Synchronring derart ausgebildet, dass mittels eines Formschlusses zwischen dem Reibring und der Verschiebesicherung des Synchronrings eine Bewegung des Reibringes relativ zu einer anderen Komponente der Synchronisierungseinheit im Wesentlichen entlang der Reibringachse im Betrieb in der Synchronisierungseinheit begrenzt werden kann.

Bevorzugt ist die Verschiebesicherung auf einer Zahnradseite des Synchronrings angeordnet ist. Insbesondere kann die Verschiebesicherung am Synchronring fixiert werden, beispielsweise durch ein Kleben und/oder Schweissen. Insbesondere kann die Verschiebesicherung als ein integrales Teil des Reibringes ausgebildet sein, welches beispielsweise in einem Umformverfahren oder einem Stanzverfahren integral mit dem Synchronring gebildet wird.

Bevorzugt ist die Verschiebesicherung als zumindest eine Lasche ausgebildet, wobei sich die zumindest eine Lasche im Wesentlichen senkrecht zur Reibringachse erstreckt. Insbesondere erstreckt sich die zumindest eine Lasche in zumindest einem Abschnitt im Wesentlichen parallel zur Umfangsrichtung U.

Ein weiterer Aspekt der vorliegenden Erfindung betrifft eine Synchronisierungseinheit mit einem Reibring wie oben beschrieben oder einem Synchronring wie oben beschrieben.

Bevorzugt umfasst die Synchronisierungseinheit eine Schiebemuffe, eine Synchronnabe, einen Synchronring sowie ein Gangrad, die derart koaxial zur Reibringachse angeordnet sind, dass im Betriebszustand der Synchronring durch die Schiebemuffe gemeinsam mit dem Reibring entlang der Reibringachse in Richtung zum Gangrad verschiebbar ist, so dass die innere Reibfläche des Reibringkörpers mit dem Gangrad in Eingriff bringbar ist.

Ein weiterer Aspekt der vorliegenden Erfindung betrifft ein Zahnräderwechselgetriebe für ein Fahrzeug, insbesondere für einen Personenkraftwagen, einen Transporter oder eine Lastkraftwagen mit einem Reibring oder einer Synchronisierungseinheit wie oben beschrieben.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen
- Fig. 1a: einen Reibring mit segmentiertem Reibringkörper in einer expandierten Konfiguration;
- Fig. 1b: den Reibring gemäss Fig. 1a in einer zusammengezogenen Konfiguration;
- Fig. 1c: einen Schnitt entlang der Schnittlinie I-I gemäss Fig. 1a;
- Fig. 1d: einen Abschnitt des Reibrings gemäss Fig. 1a bzw. Fig. 1b in perspektivischer Ansicht;
- Fig. 2a: ein zweites Ausführungsbeispiel eines segmentierten Reibrings mit radialen Verdrehsicherungen;
- Fig. 2b: einen Abschnitt des Rebrings gemäss Fig. 2a in perspektivischer Ansicht;
- Fig. 3: ein einfaches Ausführungsbeispiel einer Synchronisierungseinheit;
- Fig. 4: einen erfindungsgemässen geschlitzten Reibring in einer expandierten Konfiguration;
- Fig.5: den erfindungsgemässen geschlitzten Reibring gemäss Fig. 4 in einer zusammengezogenen Konfiguration;
- Fig. 6: einen erfindungsgemässen geschlitzten Reibring mit einer Begrenzungseinrichtung in einer Synchronisierungseinheit;
- Fig. 7: einen erfindungsgemässen Synchronring mit einer Verschiebesicherung in einer Synchronisierungseinheit.

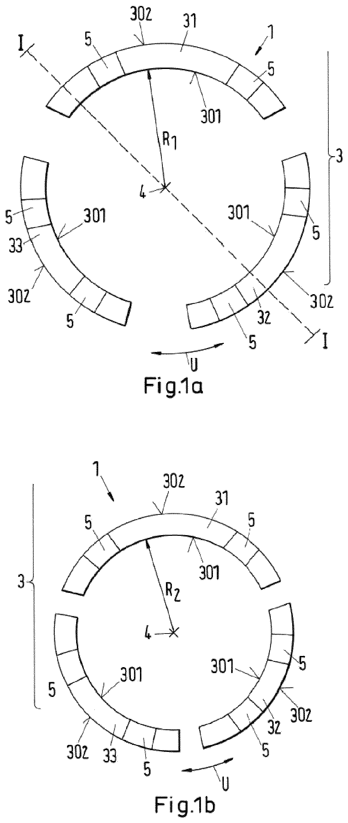

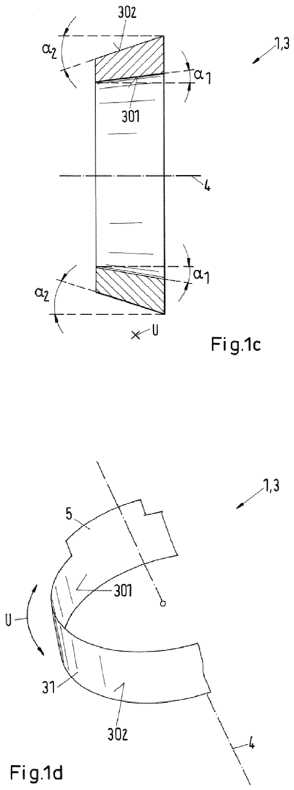

Die Fig. 1a und Fig. 1b bzw. die Fig. 1c und 1d zeigen in einer schematischen Darstellung ein und dasselbe sehr einfache Ausführungsbeispiel eines Reibrings mit segmentiertem Reibringkörper, wobei der Reibring im Folgenden gesamthaft mit dem Bezugszeichen 1 bezeichnet wird.

Gleiche Referenzzeichen bezeichnen gleiche Merkmale in allen Figuren.

Fig. 1a zeigt den Reibring 1 dabei in einer expandierten Konfiguration, während Fig. 1b denselben Reibring in einer zusammengezogenen Konfiguration zeigt. Fig. 1c zeigt zum besseren Verständnis einen Schnitt entlang der Schnittlinie I-I gemäss Fig. 1a, während anhand der Fig. 1d ein Abschnitt des Reibrings 1 gemäss Fig. 1a bzw. Fig. 1b in perspektivischer Ansicht gezeigt ist, um die sich entlang der Reibringachse 4 des Reibrings 1 erstreckenden Verdrehsicherungen 5 besser sehen zu können.

Der Reibring 1 gemäss den Fig. 1a bis Fig. 1d dient zur Verwendung in einer Synchronisierungseinheit 2 eines Zahnräderwechselgetriebes, insbesondere für ein Fahrzeug, im Speziellen für einen Personenkraftwagen, einen Transporter oder einen Lastkraftwagen. Der Reibring 1 umfasst einen konischen Reibringkörper 3 mit einer inneren Reibfläche 301 und einer, bevorzugt als weitere Reibungsfläche ausgebildeten äusseren Einbaufläche 302, die den Reibringkörper 3 in einer senkrecht zu einer axialen Reibringachse 4 verlaufenden radialen Umfangsrichtung U jeweils begrenzen. Dabei erstreckt sich die innere Reibfläche 301 unter einem vorgebaren Reibwinkel α₁ und die äussere Einbaufläche 302 unter einem vorgebaren Einbauwinkel α₂ jeweils konisch entlang der Reibringachse 4, wobei gemäss der vorliegenden Erfindung der Reibwinkel α₁ verschieden vom Einbauwinkel α₂ ist.

Wie insbesondere der Fig. 1c deutlich zu entnehmen ist, ist der Einbauwinkel α₂ besonders bevorzugt grösser ist als der Reibwinkel α₁. Dabei ist es im Prinzip auch möglich, dass der Reibwinkel α₁ grösser ist als der Einbauwinkel α₂.

Wie anhand der Fig. 1a und Fig. 1 deutlich zu erkennen ist, ist der Reibringkörper 3 in diesem speziellen Ausführungsbeispiel ein segmentierter Reibringkörper 3, der eine Mehrzahl von separaten Reibringsegmenten 31, 32, 33, im vorliegenden speziellen Ausführungsbeispiel also drei Reibringsegmenten 31, 32, 33 umfasst, die in einer ringförmigen Anordnung den Reibringkörper 3 derart bilden, dass der Reibringkörper 3 im Einbauzustand in einer ersten expandierten Konfiguration gemäss Fig. 1a einen ersten Radius R₁ und in einer zweiten zusammengezogenen Konfiguration gemäss Fig. 1b einen zweiten Radius R₂ hat.

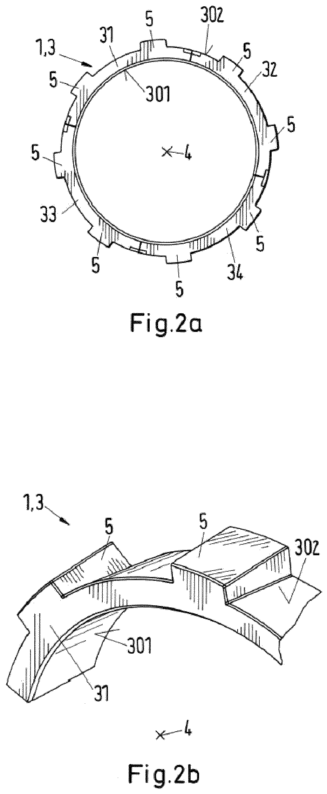

Es versteht sich dabei, dass der Reibring 1 auch aus einer anderen Anzahl von Reibringsegmenten 31, 32, 33, 34 aufgebaut sein kann, z.B. wie anhand der Fig. 2a und Fig. 2b exemplarisch gezeigt auch aus vier Reibringsegmenten 31, 32, 33, 34, oder auch zum Beispiel nur aus zwei oder mehr als vier Reibringsegmenten 31, 32, 33, 34.

Am Reibringkörper 3 ist dabei besonders bevorzugt mindestens eine Verdrehsicherung 5 vorgesehen, die sich bevorzugt entlang der Reibringachse 4 erstreckt, was man besonders deutlich aus der Fig. 1d ersehen kann.

Die Fig. 2a und Fig. 2b zeigen dabei das bereits erwähnte andere Ausführungsbeispiel eines erfindungsgemässen Reibrings 1, bei welchem sich die Verdrehsicherung 5 im Wesentlichen senkrecht zur Reibringachse 4 erstreckt.

Es versteht sich dabei von selbst, dass unabhängig von den gezeigten speziellen Ausführungsbeispielen die Anzahl der Verdrehsicherungen 5 je nach Ausführungsbeispiel verschieden sein und eine beliebige Anzahl an Verdrehsicherungen 5 vorgesehen sein können. In ganz speziellen Fällen ist es sogar möglich, dass die Verdrehsicherungen 5 am Reibring 1 fehlen und / oder, dass beispielweise andere Massnahmen vorgesehen sein können, die ein Verdrehen des Reibrings 1 im Betriebszustand verhindern.

Besonders vorteilhaft kann an der Reibfläche 301 und / oder an der Einbaufläche 302 eine in den Figuren aus Gründen der Übersichtlichkeit nicht explizit dargestellte Reibbeschichtung, insbesondere ein Reibbeschichtung in Form eines Karbon Reibbelags vorgesehen sein, die unter anderem dazu dienen kann, eine resultierende hohe mechanische und / oder thermische Belastung der Reibpaarung zumindest teilweise zu kompensieren. Besonders Vorteilhaft ist der Reibring 1 dabei ein Stahlstanzteil oder Blechumformteil, was insbesondere eine industrielle Massenfertigung besonders einfach oder kostengünstig macht.

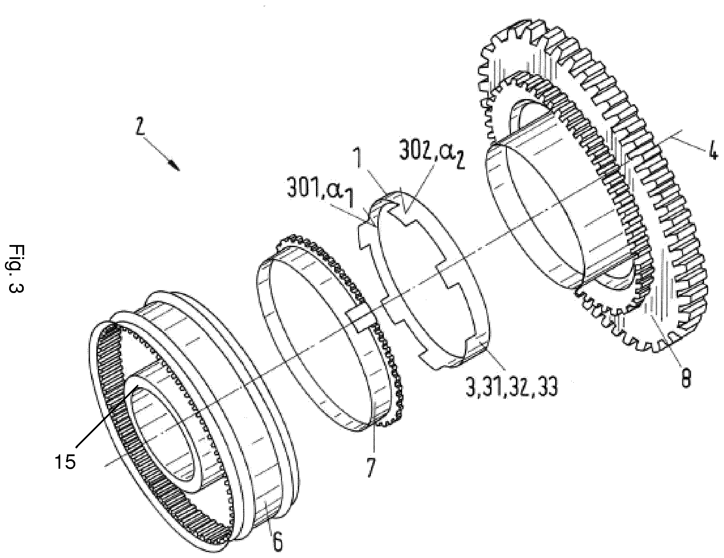

Figur 3 zeigt in schematischer Darstellung eine Synchronisierungseinheit 2 mit einem Reibring 1.

Die Synchronisierungseinheit 2 gemäss Fig. 3 umfasst neben dem Reibring 1 in an sich bekannter Weise weiter eine Schiebemuffe 6 mit einem Synchronkörper 15, einen Synchronring 7, sowie ein Gangrad 8, wobei die vorgenannten Komponenten derart koaxial zur Reibringachse 4 angeordnet sind, dass im Betriebszustand der Synchronring 7 durch die Schiebemuffe 6 gemeinsam mit dem Reibring 1 entlang der Reibringachse 4 in Richtung zum Gangrad 8 verschiebbar ist, so dass die innere Reibfläche 301 des Reibringkörpers 3 mit dem Gangrad 8 in Eingriff bringbar ist.

Der Synchronring 2 ist dabei in Fig. 3 aus gestanztem Stahl konventioneller Bauart gefertigt. Der Konus des Synchronrings 7 hat dabei denselben großen inneren Winkel α₂, also identisch zum Einbauwinkel α₂ des Reibrings 1, wobei der Synchronring 7 an sich bekannte, nicht näher dargestellte Kopplungstaschen für den segmentierten Reibring 1 hat. Der segmentierte Reibring 1 gemäss Fig. 3 ist in drei gleich große Reibringsegmente 31, 32, 33 segmentiert, was aus Gründen der Übersichtlichkeit in Fig. 3 nicht im Detail dargestellt ist. Der Reibring 1 hat gemäss der Erfindung dabei die Einbaufläche 302 mit dem Einbauwinkel α₂, wobei die Einbaufläche 302 als Trennfläche verwendet wird. Der Innenkonus des Reibrings 1 wird durch die Reibfläche 301 mit Reibwinkel α₁ gebildet, wobei α₁ < α₂ gilt. Diese innere Konusfläche, also die Reibfläche 301 wird zum Synchronisieren genutzt.

Im Betriebszustand wird der Synchronring 7 axial in Richtung zum Gangrad 8, das als Zahnrad ausgebildet ist, verschoben und damit werden auch die drei Reibringsegmente 31, 32, 33 des Reibrings 1 durch den Winkel α₂ erfasst.

Der Synchronring 7 und der segmentierte Reibring 1 werden dann zusammen gleichzeitig bewegt und mit dem Innenkonus, also der Reibfläche 301 mit Reibwinkel α₁, auf das Gangrad 8, das ebenfalls einen entsprechenden Gegenkonus mit Konuswinkel α₁ hat, eingreifen. Der Synchronring 7 kann dann wie ein herkömmlicher Synchronring 7 ansteuern und indexieren. Die Zähne der Schiebemuffe 6 sind im Kontakt mit den Zähnen des Synchronrings 7 und erzeugen so, durch die Differenzdrehzahl, ein Moment zwischen dem segmentierten Reibring 1 und dem Gangrad 8.

Nach der Synchronisation, wenn die Differenzdrehzahl Null ist, wird die Schiebemuffe 6 axial bewegt, wobei diese die Synchronringzähne passiert und dann im Kontakt mit den Zähnen der Flanken des Gangrades 8 steht. Aufgrund dessen gibt es keine Axialkraft mehr auf dem Synchronring 7. Der große Winkel α₂ wird das System trennen (Winkel > tan⁻¹ µ). Dies resultiert durch die Eliminierung der Kräfte in Umfangsrichtung des segmentierten Reibrings 1. An diesem Punkt brechen der Synchronring 7 und der segmentierte Reibring 1 vom Gangrad 8 los. Anschließend kann die Schiebemuffe 6 das Gangrad 8 passieren. Die Schaltung ist dann vollständig im Eingriff.

Dabei sind im Speziellen mindestens zwei verschiedene Optionen 1 und 2 möglich. Bei Option 1 weist die Reibfläche auf dem Innenkonus der Segmente mit dem kleinen Winkel α₁. Der große Lösewinkel α₂ ist auf der äußeren Konusfläche der Segmente.

Bei Option 2, hat die Reibfläche auf dem Außenkonus der Segmente den kleinen Winkel α₁. Der große Lösewinkel α₂ ist auf der inneren Konusfläche der Segmente, wobei in der Praxis die Option 1 das bevorzugte Konzept ist.

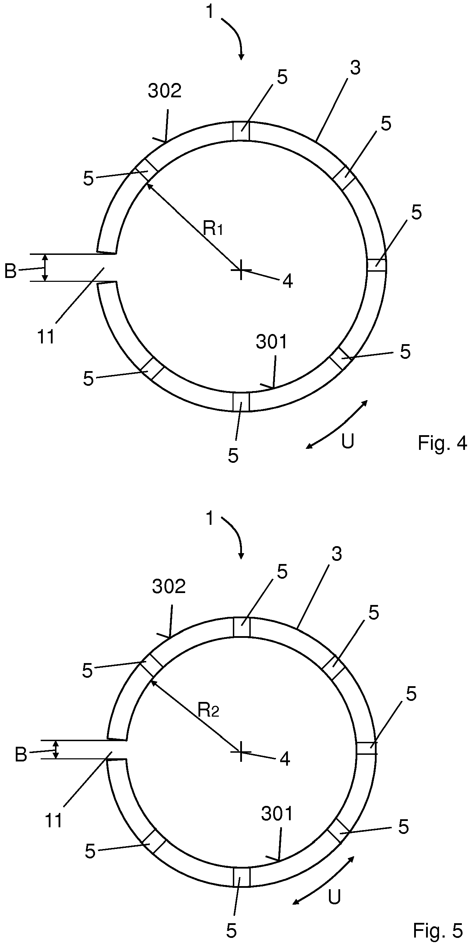

In Figur 4 ist schematisch eine alternative Ausführungsform eines erfindungsgemässen Reibrings 1 in einer expandierten Konfiguration mit einem Radius R₁ dargestellt, der beispielsweise in der Synchronisierungseinheit gemäss Fig. 3 verwendbar.

Der Reibring 1 umfasst einen geschlitzten Reibringkörper 3. In dem Reibringkörper 3 ist genau ein Schlitz 11 angeordnet, der eine Breite B aufweist, die in Umfangsrichtung U etwa 3 mm des Umfangs des Reibringkörpers überstreicht.

In Figur 5 ist der Reibring 1 gemäss Figur 4 in einer zusammengezogenen Konfiguration mit dem Radius R₂ gezeigt. Der Schlitz 11 gemäss Figur 5 hat eine kleinere Breite B als der Schlitz gemäss Figur 4.

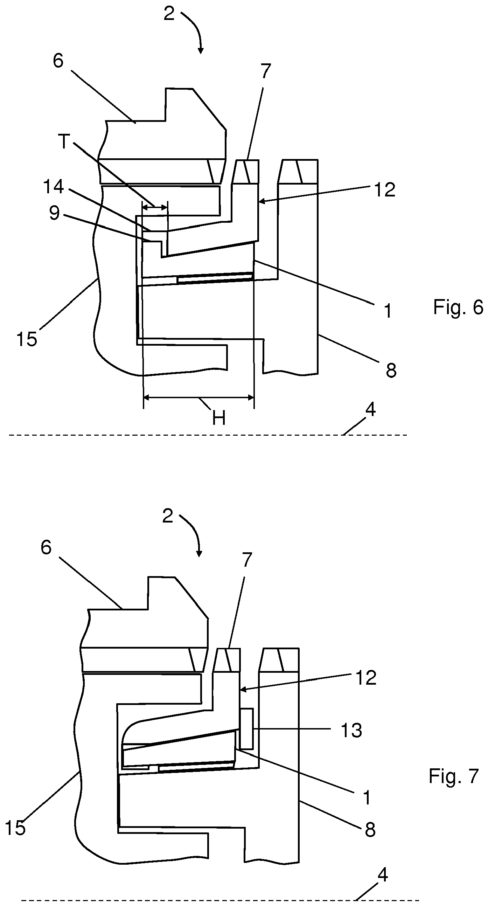

In Figur 6 ist ein Ausschnitt einer Synchronisierungseinheit 2 in einem Betriebszustand schematisch dargestellt. Die Synchronisierungseinheit 2 umfasst ein Gangrad 8, einen Synchronring 7, einen Reibring 1, eine Synchronnabe 15 und eine Schiebemuffe 6.

Der Synchronring 7 weist eine Zahnradseite 12 und eine Ausnehmung 14 mit einer Breite T auf, in die ein Vorsprung 9 des Reibrings hineinragt. Der Vorsprung 9 ist an einem der Zahnradseite 12 abgewandten Ende angeordnet. Der Vorsprung 9 erstreckt sich sich im Wesentlichen senkrecht zur Reibringachse 4. Zudem erstreckt sich der Vorsprung 9 in einem Abschnitt im Wesentlichen parallel zur Umfangsrichtung, was hier aber nicht gezeigt ist.

Die Breite T ist grösser als die Breite des Vorsprungs 9 parallel zur Reibringachse 4, so dass der Reibring 1 ein gewisses Spiel zur Bewegung parallel zur Reibringachse 4 hat. Der Reibring 1 ist relativ zum Synchronring 7 parallel zur Reibringachse um höchstens 15% einer maximalen Höhe H des Reibrings parallel zur Reibringachse 4 verschiebbar.

In Figur 7 ist ein Ausschnitt einer alternativen Synchronisierungseinheit 2 in einem Betriebszustand schematisch dargestellt. Das Gangrad 8 und die Schiebemuffe 6 mit Synchronnabe 15 sind identisch ausgebildet wie in Figur 6.

Im Unterschied zur Figur 6 ist auf der Zahnradseite 12 des Synchronrings 7 eine Lasche 13 angeordnet. Der Reibring 1 ist wie beschrieben ausgestaltet.

Durch die Anordnung der Lasche 13 wird erreicht, dass der Reibring 1 im Betrieb ein gewisses Spiel zur Bewegung parallel zur Reibringachse 4 hat.

## Patentansprüche

1. Synchronisierungseinheit (2) für ein Zahnräderwechselgetriebe eines Fahrzeuges, mit einem Reibring (1) und einem Synchronring (7), wobei der Reibring (1) einen konischen Reibringkörper (3) mit einer inneren Reibfläche (301) und einer äusseren Einbaufläche (302) umfasst, die den Reibringkörper (3) in einer senkrecht zu einer axialen Reibringachse (4) verlaufenden radialen Umfangsrichtung (U) jeweils begrenzen, und sich die innere Reibfläche (301) unter einem vorgebbaren Reibwinkel (α₁) und die äussere Einbaufläche (302) unter einem vorgebbaren Einbauwinkel (α₂) jeweils konisch entlang der Reibringachse (4) erstrecken, und der Synchronring (7) eine Zahnradseite (12) umfasst, wobei der Reibringkörper (3) eine Begrenzungseinrichtung umfasst zur Begrenzung einer Bewegung des Reibringes (1) im Betrieb im Wesentlichen entlang der Reibringachse (4), wobei die Begrenzungseinrichtung bei bestimmungsgemässem Gebrauch an einem der Zahnradseite (12) abgewandten Ende (10) angeordnet ist und/oder der Synchronring (7) zumindest eine Verschiebesicherung umfasst zur Begrenzung einer Verschiebung des Reibringes (1) im Betrieb im Wesentlichen entlang der Reibringachse (4), wobei die Verschiebesicherung auf der Zahnradseite (12) angeordnet ist **dadurch gekennzeichnet, dass** der Reibwinkel (α₁) verschieden vom Einbauwinkel (α₂) ist.

2. Synchronisierungseinheit nach Anspruch 1, **dadurch gekennzeichnet, dass**
der Einbauwinkel (α₂) grösser ist als der Reibwinkel (α₁).

3. Synchronisierungseinheit nach Anspruch 1oder 2 **dadurch gekennzeichnet, dass** die Begrenzungseinrichtung als zumindest ein Vorsprung (9) ausgebildet ist, wobei insbesondere der zumindest eine Vorsprung (9) sich im Wesentlichen senkrecht zur Reibringachse (4) erstreckt, und wobei insbesondere der zumindest eine Vorsprung (9) sich in zumindest einem Abschnitt im Wesentlichen parallel zur Umfangsrichtung (U) erstreckt.

4. Synchronisierungseinheit nach einem der Ansprüche 1 bis3, wobei der Reibringkörper (3) als geschlitzter Reibringkörper (3) mit zumindest einem Schlitz (11) ausgebildet ist, wobei der Reibringkörper (3) in einer ersten expandierten Konfiguration einen ersten Radius (R₁) und in einer zweiten zusammengezogenen Konfiguration einen zweiten Radius (R₂) hat, wobei insbesondere der Reibringkörper (3) genau einen Schlitz (11) aufweist.

5. Synchronisierungseinheit nach einem der vorangehenden Ansprüche, wobei der Reibringkörper (3) ein segmentierter Reibringkörper (3) ist, der eine Mehrzahl von separaten Reibringsegmenten (31, 32, 33, 34) umfasst, die in einer ringförmigen Anordnung den Reibringkörper (3) derart bilden, dass der Reibringkörper (3) im Einbauzustand in einer ersten expandierten Konfiguration einen ersten Radius (R₁) und in einer zweiten zusammengezogenen Konfiguration einen zweiten Radius (R₂) hat.

6. Synchronisierungseinheit nach einem der vorangehenden Ansprüche, wobei am Reibringkörper (3) eine Verdrehsicherung (5) vorgesehen ist, die sich bevorzugt entlang der Reibringachse (4) und / oder senkrecht zur Reibringachse (4) erstreckt.

7. Synchronisierungseinheit nach einem der vorangehenden Ansprüche, wobei an der Reibfläche (301) und / oder an der Einbaufläche (302) eine Reibbeschichtung, insbesondere ein Reibbeschichtung in Form eines Karbon Reibbelags vorgesehen ist.

8. Synchronisierungseinheit nach einem der vorangehenden Ansprüche, wobei der Reibring (1) ein Stahlstanzteil oder ein Blechumformteil ist.

9. Synchronisierungseinheit nach einem der vorangehenden Ansprüche, **dadurch gekennzeichnet, dass** die Verschiebesicherung als zumindest eine Lasche (13) ausgebildet ist, wobei sich die zumindest eine Lasche (13) im Wesentlichen senkrecht zur Reibringachse (4) erstreckt, und wobei insbesondere die zumindest eine Lasche (13) sich in zumindest einem Abschnitt im Wesentlichen parallel zur Umfangsrichtung (U) erstreckt.

10. Synchronisierungseinheit nach einem der vorangehenden Ansprüche, wobei die Synchronisierungseinheit weiter eine Schiebemuffe (6), eine Synchronnabe (15) sowie ein Gangrad (8) umfasst, die derart koaxial zur Reibringachse (4) angeordnet sind, dass im Betriebszustand der Synchronring (7) durch die Schiebemuffe (6) gemeinsam mit dem Reibring (1) entlang der Reibringachse (4) in Richtung zum Gangrad (8) verschiebbar ist, so dass die innere Reibfläche (301) des Reibringkörpers (3) mit dem Gangrad (8) in Eingriff bringbar ist.

11. Zahnräderwechselgetriebe für ein Fahrzeug, insbesondere für einen Personenkraftwagen, einen Transporter oder eine Lastkraftwagen mit einer Synchronisierungseinheit (2) nach einem der vorangehenden Ansprüche.

## Claims

1. A synchronization unit (2) for a gear changing transmission of a vehicle, with a friction ring (1) and a synchronizer ring (7), wherein the friction ring (1) comprises a conical friction ring body (3) with an inner friction surface (301) and an outer installation surface (302), which each bound the friction ring body (3) in a radial circumferential direction (U) drifting perpendicular to an axial friction ring axis (4), and wherein the inner friction surface (301) at a presettable friction angle (α1) and the outer installation surface (302) at a presettable installation angle (α2) each extend conically along the friction ring axis (4), and the synchronizer ring (7) comprises a gear side (12), wherein the friction ring body (3) comprises a limiting device for limiting a movement of the friction ring (1) in the operating mode substantially along the friction ring axis (4), wherein the limiting device, when used as intended, is arranged at one end (10) facing away from the gear side (12) and / or the synchronizer ring (7) comprises at least a displacement protection device for limiting a displacement of the friction ring (1)) in the operating mode substantially along the friction ring axis (4), wherein the displacement protection device is arranged at the gear side, **characterized in that** the friction angle (α1) is different from the installation angle (α2).

2. A synchronization unit in accordance with claim 1, **characterized in, that** the installation angle (α2) is greater than the friction angle (α1).

3. A synchronization unit in accordance with claim 1 or 2, **characterized in, that** the limiting device is designed as at least one protrusion (9), wherein in particular the at least one protrusion (9) extends substantially perpendicular to the friction ring axis (4), and wherein in particular the at least one protrusion (9) extends in at least one section substantially parallel to the circumferential direction (U).

4. A synchronization unit in accordance with anyone of the claims 1 to 3, wherein the friction ring body (3) is designed as a slit friction ring body (3) with at least one slit (11), wherein the friction ring body (3) has a first radius (R1) in a first expanded configuration and a second radius (R2) in a second contracted configuration, wherein in particular the friction ring body (3) has exactly one slit (11).

5. A synchronization unit in accordance with anyone of the preceding claims, wherein the friction ring body (3) is a segmented friction ring body (3) comprising a plurality of separate friction ring segments (31, 32, 33, 34), which form the friction ring body (3) in an annular arrangement in such a manner, that, in the installed state, the friction ring body (3) has a first radius (R1) in a first expanded configuration and a second radius (R2) in a second contracted configuration.

6. A synchronization unit in accordance with anyone of the preceding claims, wherein an anti-rotation device is provided at the friction ring body (3), which device preferably extends along the friction ring axis (4) and / or perpendicular to the friction ring axis (4).

7. A synchronization unit in accordance with anyone of the preceding claims, wherein a friction coating, in particular a friction coating in the form of a carbon friction lining is provided on the friction surface (301) and / or on the installation surface (302).

8. A synchronization unit in accordance with anyone of the preceding claims, wherein the friction ring (1) is a steel punched part or a sheet-metal part.

9. A synchronization unit in accordance with anyone of the preceding claims, **characterized in that** the displacement protection device is designed as at least one lug (13), wherein the at least one lug (13) extends substantially perpendicular to the friction ring axis (4), and wherein in particular the at least one lug (13) extends in at least one section substantially parallel to the circumferential direction (U).

10. A synchronization unit in accordance with anyone of the preceding claims, wherein the synchronization unit further comprises a sliding sleeve (6), a synchronizer hub (15) and a gearwheel (8), which are arranged coaxial with the friction ring axis (4) in such a manner, that in the operating mode the synchronizer ring (7) is displaceable by the sliding sleeve (6) together with the friction ring (1) along the friction ring axis (4) in the direction of the gear wheel (8), so that the inner friction surface (301) of the friction ring body (3) is engageable with the gear wheel (8).

11. A gear changing transmission for a vehicle in particular for a passenger car, a transporter or a truck, having a synchronization unit (2) in accordance with anyone of the preceding claims.

## Revendications

1. Unité de synchronisation (2) pour une boîte de vitesse à roues dentées d'un véhicule, avec un anneau de friction (1) et un anneau synchrone (7), dans lequel l'anneau de friction (1) comprend un corps d'anneau de friction conique (3) avec une surface de frottement intérieure (301) et une surface d'encastrement extérieure (302), qui délimitent chacune le corps d'anneau de friction (3) dans une direction circonférentielle radiale (U) perpendiculaire à un axe de l'anneau de friction axial (4), et la surface de frottement intérieure (301) sous un angle de frottement (α1) prédéfinissable (α1) et la surface d'encastrement extérieure (302) sous un angle d'encastrement prédéfinissable (α2) s'étendent chacune coniquement le long de l'axe de l'anneau de friction (4), et l'anneau synchrone (7) comprend un côté de la roue dentée (12), dans lequel le corps d'anneau de friction (3) comprend un dispositif de limitation pour limiter un mouvement de l'anneau de friction (1) dans l'opération essentiellement le long d'axe de l'anneau de friction (4), dans lequel le dispositif de limitation est disposé à une extrémité (10) détournée de côté de la roue dentée (12) en cas d'utilisation conforme aux instructions et / ou l' anneau synchrone (7) comprend au moins un dispositif de sécurité de déplacement pour limiter un déplacement de l'anneau de friction (1) dans l'opération essentiellement le long d'axe de l'anneau de friction (4), dans lequel le dispositif de sécurité de déplacement est disposé sur le côté de la roue dentée (12), **caractérisé en ce que** l'angle de frottement (α1) est différent de l'angle d'encastrement (α2).

2. Unité de synchronisation selon la revendication 1, **caractérisé en ce, que** l'angle d'encastrement (α2) est supérieur à l'angle de frottement (α1).

3. Unité de synchronisation selon la revendication 1 ou 2, **caractérisé en ce, que** le dispositif de limitation est conçu comme au moins une saillie (9), dans lequel en particulier la au moins une saillie (9) s'étend essentiellement perpendiculaire à l'axe de l'anneau de friction (4) et dans lequel en particulier la au moins une saillie (9) s'étend essentiellement dans au moins une section parallèle à la direction circonférentielle (U).

4. Unité de synchronisation selon l'une des revendications 1 à 3, dans lequel le corps d'anneau de friction (3) est conçu comme un corps d'anneau de friction fendue (3) avec au moins une fente (11), dans lequel le corps d'anneau de friction (3) a un premier radius (R1) dans une première configuration expansée et un deuxième radius (R2) dans une seconde configuration contractée, dans lequel, en particulier l'anneau de friction (3) a exactement une fente (11).

5. Unité de synchronisation selon l'une des revendications précédentes, dans lequel le corps d'anneau de friction (3) est un corps d'anneau de friction segmenté (3), qui comprend une pluralité de segments d'anneau de friction séparés (31, 32, 33, 34), qui forment le corps d'anneau de friction (3) dans un disposition annulaire de telle sorte, que le corps d'anneau de friction (3) à l'état encastré a un premier radius (R1) dans une première configuration expansée et un deuxième radius (R2) dans une seconde configuration contractée.

6. Unité de synchronisation selon l'une des revendications précédentes, dans lequel un élément anti-rotation (5) est prévu sur le corps d'anneau de friction (3), lequel s'étend de préférence le long de l'axe de l'anneau de friction (4) et / ou perpendiculaire à l'axe de l'anneau de friction (4).

7. Unité de synchronisation selon l'une des revendications précédentes, dans lequel sur la surface de frottement (301) et / ou sur la surface d'encastrement (302) un revêtement de friction, en particulier un revêtement de friction sous forme d'une garniture de friction au carbone est prévu.

8. Unité de synchronisation selon l'une des revendications précédentes, dans lequel l'anneau de friction (1) est une pièce découpée d'acier ou une pièce façonnée en tôle.

9. Unité de synchronisation selon l'une des revendications précédentes, **caractérisé en ce, que** le dispositif de sécurité de déplacement est conçu comme au moins une patte (13), dans lequel la au moins une patte (13) s'étend essentiellement perpendiculaire à l'axe de l'anneau de friction (4), et dans lequel en particulier la au moins une patte (13) s'étend essentiellement dans au moins une section parallèle à la direction circonférentielle (U).

10. Unité de synchronisation selon l'une des revendications précédentes, dans lequel l'unité de synchronisation comprend en outre un manchon coulissant (6), un moyeu synchrone (15) et une roue dentée (8), qui sont disposés de telle sorte coaxialement à l'axe de l'anneau de friction (4), que dans l'état de l'opération l'anneau synchrone (7) est déplaçable par le manchon coulissant (6) avec l'anneau de friction (1) le long de l'axe de l'anneau de friction (4) en direction de la roue dentée (8), de sorte que la surface de frottement intérieure (301) du corps de l'anneau de friction (3) pouvant être engagé avec la roue dentée (8).

11. Boîte de vitesse à roues dentées pour un véhicule, en particulier pour une voiture particulière, un véhicule de transport ou un camion aves une unité de synchronisation (2) selon l'une des revendications précédentes.
